# EUROPEAN PATENT APPLICATION

(11) **EP 4 632 360 A1**
(43) Date of publication of application: **15.10.2025**
(21) Application number: 25169649.8
(22) Date of filing: 10.04.2025
(51) Int. Cl.: G01N 21/952, G01N 21/88

(54) **METHOD FOR PERFORMING AN OPTICAL ANALYSIS ON AN ARTICLE OF THE TOBACCO INDUSTRY AND MACHINE FOR MAKING ARTICLES OF THE TOBACCO INDUSTRY**

(30) Priority: 11.04.2024 IT 202400008203
(71) Applicant: G.D S.p.A., 40133 Bologna (IT)
(72) Inventor: CESARINI, Maria Eleonora, Bologna (IT); PETTINARI, Fabrizio, Bologna (IT)
(74) Representative: Bianciardi, Ezio

(57) **Abstract**

A method for performing an optical analysis of an article (100) of the tobacco industry comprising a step of providing an article (100) of the tobacco industry and a step of providing an electromagnetic radiation emitter (200) comprising a polarizing filter (300) configured for selectively filtering the electromagnetic radiation emitted by the emitter (200) based on the respective oscillation direction. A method further comprises a step of lighting the article (100) by means of the emitter (200) so that the article (100) is lit with polarized radiation and a step of detecting, by means of a camera (400), the electromagnetic radiation reflected by the article (100). The method further comprises a step of generating an image of the article (100), based on the detected electromagnetic radiation.

## Description

The present invention relates to a method for performing an optical analysis of an article of the tobacco industry and a machine for making these articles of the tobacco industry.

As is known, when producing articles of the tobacco industry, it is particularly important for the article, whether it is a smoking article (rod shaped) or a pack of smoking articles, to comply with a required standard. Thus, in this situation, the need is particularly felt to inspect the article, e.g., by measuring some of the components thereof, in order to evaluate the conformity thereof.

In order to inspect the articles, systems are known to comprise an electromagnetic radiation emitter, configured for lighting the article to be inspected, and a polarized camera (i.e., a camera capable of simultaneously acquiring four series of images per frame) configured for detecting the electromagnetic radiation reflected by the article.

From the above detection it is obtained an image on a gray scale of the article generated based on the electromagnetic radiation detected, i.e., based on the electromagnetic radiation reflected by the different components of the article.

In fact, it is known that the articles, for example the smoking articles, can have different components, such as, for example, embossed paper connecting strips, at least partially metallic or metallized connecting strips, paper filling materials etc., which, being made of different materials, reflect the electromagnetic radiation differently.

In other words, each component of the article, which is lit with the electromagnetic radiation, reflects the latter, diverting it differently. This reflected electromagnetic radiation is detected by the polarized camera and, based on this acquisition, the image of the article is generated on a gray scale.

Disadvantageously, if the article comprises metallic and/or metallized components, or if the article comprises lighter-colored components, the image obtained has undesired reflections and a weak contrast, which does not allow identifying and distinguishing the different components of the article. In this situation, the image of the article has a prevalence of intermediate tones and it is not possible to take precise and reliable measurements of the dimensions of the components and/or to detect the orientation of the components.

Furthermore, as the amount of reflected polarized radiation increases with the angle of incidence, if a component of the article is placed substantially parallel to the light source and to the camera, or if a wall thereof is detected, which is not perpendicular to the lighting direction, it is difficult to detect, risking to create an offset image. Also, in this situation, it is not possible to take precise and reliable measurements of the dimensions and/or detections of the orientation of the component.

Thus, it is the technical task of the present invention to provide a method for performing an optical analysis of an article of the tobacco industry and a machine for making said articles of the tobacco industry, capable of overcoming the drawbacks of the prior art.

Thus, it is an object of the present invention to provide a method for performing an optical analysis of an article of the tobacco industry (e.g. a rod-shaped smoking article or a pack of smoking articles) and a machine for making articles of the tobacco industry (e.g. a rod-shaped smoking article or a pack of smoking articles), which allows making a precise and accurate analysis.

It is a further object of the present invention to provide a method for performing an optical analysis of an article of the tobacco industry (e.g., a rod-shaped smoking article or a pack of smoking articles), which allows efficiently identifying components having a non-planar development.

The specified technical task and objects are substantially reached by a method for performing an optical analysis of an article of the tobacco industry and a machine for making articles of the tobacco industry comprising the technical features presented in one or more of the accompanying claims.

In fact, the Applicant has found that by adopting a step of polarizing the radiation emitted, it is possible to increase, far more effectively, the contrast of the image detected, in particular by using a polarized sensor (camera). The Applicant has noted that by using a source of polarized radiation it is possible to identify, in an improved manner, components or parts of the article having a three-dimensional development, clearly allowing the detection, and with defined edges, of those lit portions, which are arranged with a specific orientation with respect to the incident polarized radiation (for example, so as to distinguish a front surface of the component from side portions of the component or for detecting cavities or ridges with respect to a smooth surface).

In particular, the specified technical task and objects are substantially achieved by a method for performing an optical analysis of an article of the tobacco industry comprising a step of providing an article of the tobacco industry, a step of providing an electromagnetic radiation emitter and a step of providing a polarizing filter configured for selectively filtering the electromagnetic radiation emitted by the emitter based on the respective oscillation direction.

The method further comprises a step of directing the radiation emitted by the emitter towards the article so that the article is struck by polarized radiation.

Preferably, the radiation is visible radiation and the detector comprises a camera.

The method further comprises a step of detecting, by means of a detector, the electromagnetic radiation reflected by the article and a step of generating an image of the article based on said detected electromagnetic radiation.

The emitter and the detector have different axes defining different angles to one another with respect to the outer surface of the article.

The term "outer surface" includes both an end surface and a cylindrical side surface of the article.

The axis of the detector preferably defines an angle different from 90° with respect to a portion of the outer surface of the article onto which the radiation is directed.

Preferably, the detector is a polarized detector and/or it comprises a sensor that is polarized concordantly with the polarizing filter to detect the polarized component of the electromagnetic radiation emitted by the emitter and thus reflected.

The electromagnetic radiation emitted by the emitter is preferably unalterably reflected by the article.

According to a possible embodiment, which is not part of the present invention, the emitter is coaxially located with respect to the detector.

In this situation, the emitter is preferably interposed between the detector and the emitter has an annular structure so that the electromagnetic radiation reflected by the article reaches the detector passing through an empty space region within the annular shape of the emitter.

Preferably, the method further comprises a step of processing the image generated in the step of generating by means of a processing software program to obtain a qualitative and/or dimensional and/or positional information about a component of the article, in particular about a discrete component applied to the article or forming part of the article.

The step of obtaining the qualitative and/or dimensional and/or positional information about the component preferably comprises a step of determining the boundary of the component.

Even more preferably, the step of determining the boundary of the component is carried out by means of a contrast recognition algorithm. According to an embodiment, the at least one component of the article is a metallic or metallized component.

The step of directing the radiation towards the article is preferably performed by directing the radiation towards an end surface of the article. According to an embodiment, at least a part of the component defines an outer surface portion of the article.

The article preferably has a cylindrical shape and the step of directing the radiation towards the article is carried out by directing the radiation towards an outer cylindrical surface of the article.

The article could be a (rod-shaped) smoking article or aerosol-generating article and in which the component is a connecting strip, or a portion or feature of the connecting strip, for example, a metallized portion or a caption or embossing or symbol or graphical sign, wrapped around two or more segments of said article in order to stably connect them. Alternatively, the article is a pack of smoking articles having an overwrapping, preferably of heat-shrinkable material, while the component is a tear tape, or a portion thereof, intended for tearing open the overwrapping.

The specified technical task and objects are further substantially achieved by a filter tip attachment/combiner machine for making articles of the tobacco industry, in particular, smoking articles or aerosol-generating articles, in particular, suitable for implementing the method according to the above.

The machine comprises a first feed unit configured for feeding first rod-shaped sections.

According to a possible embodiment, in which the machine is a filter tip attachment machine, the first feed unit is defined by a transfer station that receives the first rod-shaped sections, i.e., the segments usually comprising tobacco, having a double length, from a maker machine. In this situation, the first rod-shaped sections are advanced along a longitudinal direction and diverted so as to advance along a direction transverse to the development axis thereof.

The machine further comprises a second feed unit configured for feeding second rod-shaped sections.

According to the embodiment, in which the machine is a filter tip attachment machine, the second feed unit feeds rod sections, usually comprising filtering material, having a double length.

According to a further embodiment, the machine is a combiner machine and the first and second feed units feed first and second rod sections, respectively, by means of respective hoppers with a corresponding descent line.

More specifically, the first feed unit is configured for feeding single or multi-segment rod sections comprising at least one segment for aerosol generating articles; the second feed unit is configured for feeding single or multi-segment rod sections comprising at least one filter segment. The combination of these segments forms an aerosol generating article by means of heating.

According to a further variant, the first feed unit is configured for feeding single or multi-segment rod sections comprising at least one filter segment, while the second feed unit is configured for feeding single or multi-segment rod sections comprising at least one aerosol generating segment; the combination of these segments forming an aerosol generating article by means of heating.

More generally, the first feed unit and the second feed unit are intended to feed single-segment or multi-segment rod sections, the combination of which downstream of the rolling defines a preferably finished and ready-to-use article (having a unit or double length). Thereby, the connecting strip defines a component of the article visible to the end user.

The machine further comprises a combining drum configured for receiving the first rod sections from the first feed unit and the second rod sections from the second feed unit so as to form groups, each comprising at least a first rod section and a second rod section defining respective components. In the case of the maker machine, the tobacco segments having a double length, upstream of the combining drum, are transferred to a cutting and opening station where they are cut to obtain tobacco segments having a unit length and mutually spaced apart.

Successively, the tobacco segments thus spaced apart are conveyed to a combining drum. By doing so, each filter section having a double length on the combining drum is interposed between two respective tobacco segments having a unit length.

Whereas, in the case of the combiner machine, the first and second rod sections are combined to form groups, each comprising at least a first rod section and a second rod section.

The machine further comprises a rolling station configured for receiving the groups and for wrapping the groups with a connecting strip (paper), defining a further component of the article, so as to make a stable, mutual connection among the rod sections of the group and defining a finished article having a double or single length.

For the purposes of implementing the method according to the invention, the filter tip attachment machine or combiner machine comprises a detecting station for inspecting at least one component of each article. More specifically, the detecting station is located upstream or downstream of the rolling station and is configured for inspecting each article or at least one component of the article.

The detecting station comprises an electromagnetic radiation emitter configured and/or arranged to direct the radiation towards at least one component or article, in particular onto the outer cylindrical surface or alternatively, on one of the end surfaces, and a polarizing filter configured for selectively filtering the electromagnetic radiation emitted by the emitter based on a specific oscillation direction so that the component portion or article is struck by polarized radiation.

The detecting station further comprises a detector, preferably a polarized camera, configured for receiving the electromagnetic radiation reflected by each component or article.

The machine further comprises a control unit connected to the detector and configured for generating an image of the portion of the component or article based on the radiation detected by the detector and for obtaining a qualitative and/or dimensional and/or positional information about a component of the article and/or rod section.

In particular, a qualitative and/or dimensional and/or positional information is obtained of a discrete component applied to the article or to the rod section or forming part of the article or rod section.

The specified technical task and objects are further substantially achieved by a packing machine for making articles of the tobacco industry, in particular packs of rod-shaped smoking articles, in particular, suitable for implementing the method according to the above description.

The machine comprises a feed station, configured for feeding a series of groups of rod-shaped smoking articles and a packing station configured for wrapping, about each group of articles, at least one overwrapping, in particular at least one inner wrap and one outer wrap, forming an article of the tobacco industry.

According to a possible embodiment, the packing station comprises at least one drum, and in particular a single drum, configured for applying to each group the inner wrap and at least two drums, downstream of the aforesaid at least one drum, configured for applying to each group the outer wrap.

Preferably, downstream of the packing station, the machine comprises a station for applying an outer casing, which is preferably see-through and even more preferably heat-shrinkable, defining a further layer for wrapping the pack.

The machine further comprises a detecting station located downstream of the packing station and configured for inspecting each article (pack).

The detecting station comprises an electromagnetic radiation emitter configured and/or arranged to direct the radiation towards the article and a polarizing filter configured for selectively filtering the electromagnetic radiation emitted by the emitter based on the respective oscillation direction so that the article (pack) is struck by polarized radiation.

The detecting station further comprises a detector configured for detecting the electromagnetic radiation reflected by the pack.

The machine further comprises a control unit connected to the detector and configured for generating an image of the article (pack) based on the radiation detected by the detector and for obtaining at least one dimensional and/or positional information about a component of the article (pack), in particular, the component is a tear tape, or a portion thereof, intended for tearing open the outermost overwrapping of the pack. Further features and advantages of the present invention will become more apparent from the indicative, and thus non-limiting description of an embodiment of a method for performing an optical analysis of an article of the tobacco industry and a machine for making articles of the tobacco industry.

Such a description is presented below with reference to the accompanying drawings, provided by way of mere and thus non-limiting indication, in which:
- figure 1 shows a diagrammatic view of a first arrangement of elements, not part of the present invention, for executing the method;
- figure 2 shows a diagrammatic view of a second arrangement of elements for executing the method;
- figures 3A and 3B show an image of a pack of smoking articles acquired by means of the method of the present invention, and by means of a known method, respectively;
- figures 4A and 4B show an image of a smoking article of the tobacco industry acquired by means of the method of the present invention, and by means of a known method, respectively;
- figure 5B shows a diagrammatic view of a first embodiment of a machine according to the invention;

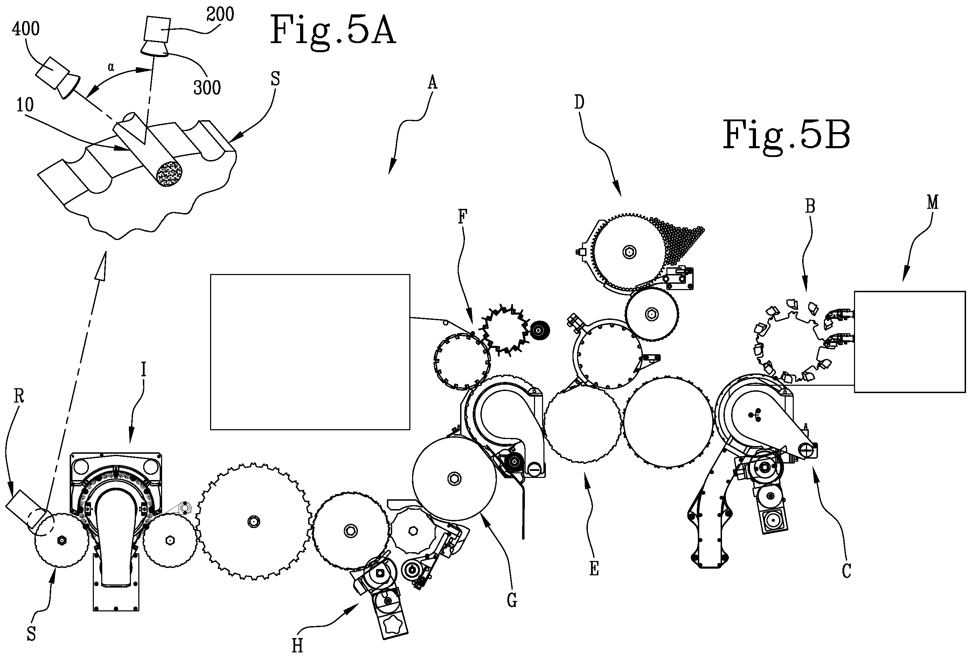

- figure 5A shows a detail of a detecting station used in the machine of figure 5B;

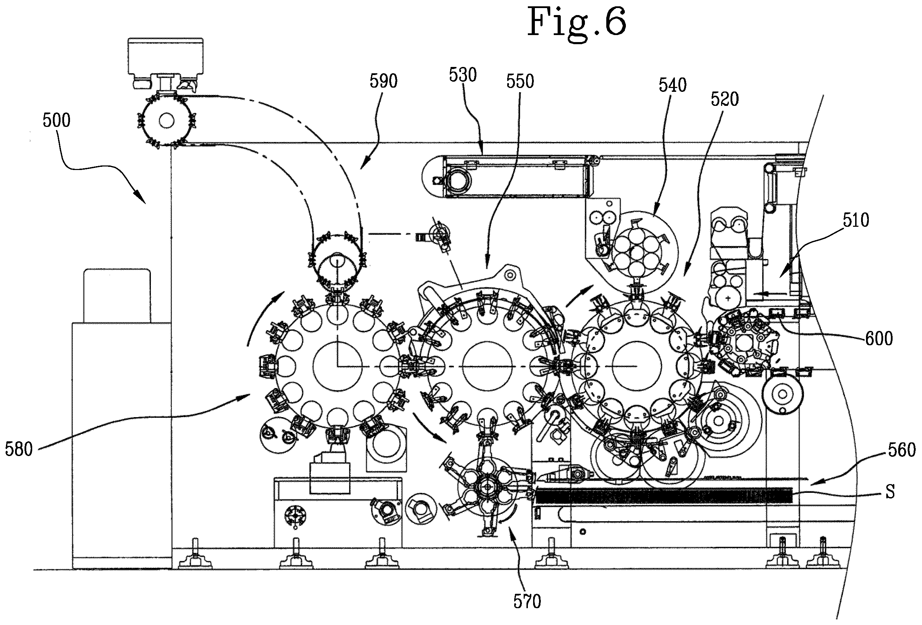

- figure 6 shows a diagrammatic view of a second embodiment of a machine according to the invention.

The method of the present invention comprises a step of providing an article 100 of the tobacco industry.

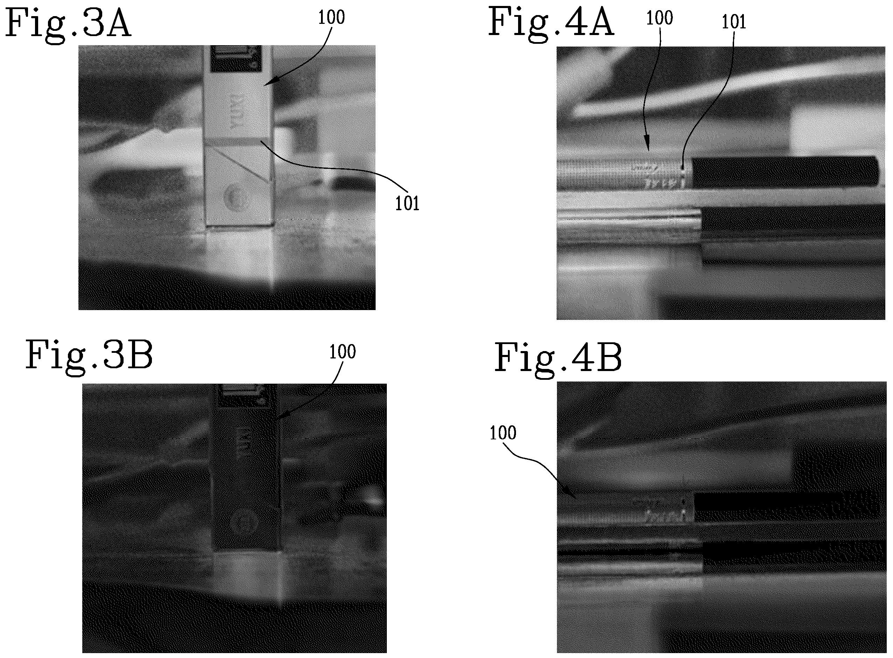

According to a possible embodiment, for example shown in figures 4A and 4B, the article 100 is a smoking article (e.g., it can be a cigarette of the traditional type or a part thereof, or it can be a cigarette of the heat-not-burn type or a part thereof).

According to a further possible embodiment, for example shown in figures 3A and 3B, the article 100 is a pack of smoking articles having an overwrapping, preferably made of a heat-shrinkable material.

The method further comprises a step of providing an electromagnetic radiation emitter 200 and a polarizing filter 300 configured for selectively filtering the electromagnetic radiation emitted by the emitter 200 based on the respective oscillation direction.

In such a situation, the polarizing filter 300 allows only the electromagnetic radiation having a predetermined oscillation direction to pass through the polarizing filter 300, while it prevents passing to the electromagnetic radiation having a different oscillation direction to that of the predetermined direction. By so doing, after crossing the polarizing filter 300, the electromagnetic radiation is polarized.

The radiation is preferably visible radiation.

Alternatively, the radiation can be radiation having a wavelength outside the field of visible radiation.

The method further comprises a step of directing the radiation emitted by the emitter 200 towards the article 100 so that the article 100 is struck by polarized radiation.

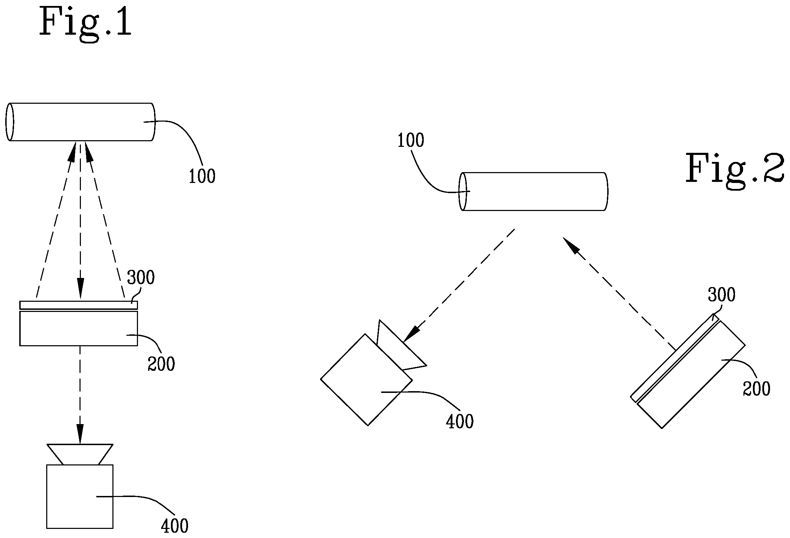

In a possible embodiment, the article 100 has a cylindrical shape. In such a situation, the step of lighting the article 100 is carried out by directing the radiation towards an outer cylindrical surface of the article 100 (figure 1 not part of the invention or 2).

Whereas, in a further possible embodiment, the step of lighting the article 100 is carried out by directing the radiation towards an end surface of the article 100.

The method further comprises a step of detecting, by means of a detector 400, the electromagnetic radiation reflected by the article 100.

The detector 400 is preferably a polarized detector and/or it comprises a polarized sensor according to a polarization direction.

More preferably, this polarization direction is concordant with the polarizing filter 300 to detect the polarized component of the electromagnetic radiation emitted by the emitter 200 and reflected unalterably by the article 100.

In other words, the detector 400 is capable of detecting the polarized electromagnetic radiation emitted by the emitter 200 and reflected by the article 100 without altering the polarization.

In particular, some materials (for example, metallic or metallized materials), which reflect without diffusion and in particular, do not alter the polarization of the incident radiation on a surface thereof with an angle of 90°, are particularly suitable for detection according to the invention because radiation is mainly or entirely reflected therefrom, without altering the polarization. This makes an excellent contrast with the adjacent materials (for example the paper), which, instead, diffuse the radiation altering the polarization thereof.

In the case of visible radiation, the detector 400 is a camera 400, in particular a polarized camera.

According to the embodiment shown in figure 1, not part of the invention, the emitter 200 is coaxially arranged with respect to the camera 400.

Again, with reference to the embodiment in figure 1, the emitter 200 is interposed between the detector 400 and the article 100. In such a situation, the emitter 200 preferably has an annular structure so that the electromagnetic radiation reflected by the article 100 reaches the detector 400 passing through an empty space region within the annular shape of the emitter 200.

Alternatively, the emitter 200 and the detector 400 could have different axes defining different angles to one another with respect to the outer surface of the article 100 (figure 2, specular angles).

Following detection by the detector 400, the method comprises a step of generating an image of the article 100 based on the detected electromagnetic radiation.

Preferably, after generating the image, the method comprises a step of processing the image by means of a processing software program for obtaining a dimensional and/or positional information about a component 101 of the article 100.

In particular, the component 101 can be a discrete component applied to the article 100 or a component forming part of the article 100, as will be described in detail below.

Preferably, but without limitation, the component 101 of the article 100 is a metallic or metallized component.

In the preferred embodiment, the step of obtaining the dimensional and/or positional information about the component 101 comprises a step of determining the boundary of the component 101.

The step of determining the boundary is preferably obtained by means of a contrast recognition algorithm. In such a situation, by virtue of the marked contrast between the component 101 and the rest of the article 100 it is clearly possible to distinguish this component 101 and obtain all the desired dimensional and/or orientation information.

Therefore, in use, the article 100 is struck by polarized electromagnetic radiation by virtue of the polarizing filter 300. In such a situation, the article 100 reflects the incident electromagnetic radiation. The article 100 can reflect the incident electromagnetic radiation without altering (diffusing and/or varying the polarization angle) the latter or by altering (diffusing and/or varying the polarization angle) this incident electromagnetic radiation, having a different direction and/or polarization with respect to the incident radiation. In such a situation, only the electromagnetic radiation reflected by the article 100, and without alteration of polarization, is effectively detected by the polarized detector 400.

As shown in the accompanying figures, whether the article 100 is a smoking article or a pack of smoking articles, it can comprise different components 101 such as connecting strips, for example, portions of embossed or printed paper, metallized or metallic strips, tear tapes, seals and the like.

Since the article 100 comprises several components 101, each made of different materials and, consequently, reflecting the polarized light of the emitter 200 differently, it is possible to obtain an image (usually on a gray scale) representative of the polarization of each component 101, i.e. representative of the capacity, or not, of each component 101 to reflect the electromagnetic radiation unalterably emitted by the emitter 200.

As shown, for example in figure 3A and 4A, note how some components 101 of the article 100 are darker than others. This is given by the capacity or incapacity of each component 101 to reflect the incident electromagnetic radiation emitted unalterably by the emitter 200.

Now, by way of non-limiting example, with reference to figures 3A and 3B, the article 100 is a pack of smoking articles having an overwrapping.

The overwrapping is preferably made of a heat-shrinkable material (e.g., see-through cellophane).

In this embodiment, the component 101 is a tear tape (but it could also be a portion of this tear tape) intended for tearing open the overwrapping.

In this embodiment, the component 101 is a discrete component applied to the pack of smoking articles.

Figure 3B shows an image of the pack of smoking articles generated on the basis of electromagnetic radiation detected by a polarized camera. In the case of figure 3B, the article 100 has been struck by radiation emitted by an emitter 200 in the absence of the polarizing filter 300. As shown in figure 3B, the image obtained is particularly dark and provided with an almost non-existent contrast. In fact, in the image in figure 3B, there is a prevalence of dark zones, which makes it impossible to distinguish the tear tape from the rest of the article 100. Therefore, in such a situation, the image obtained does not allow obtaining precise and reliable dimensional and/or positional information about the component 101.

On the contrary, in the case of figure 3A, the article 100 has been struck by radiation emitted by an emitter 200 with the presence of the polarizing filter 300, as described according to the present invention. By so doing, the incident electromagnetic radiation on the article 100 has a single oscillation direction. In such a situation, the image obtained is lighter and has a more marked contrast. The tear tape is clearly identifiable and distinguishable from the rest of the article 100 thus allowing obtaining a precise and reliable dimensional and/or positional information about the component 101.

Now, by way of non-limiting example, with reference to figures 4A and 4B, the article 100 is a smoking article, in which the component 101 is a connecting strip, (but it could also be a portion of this connecting strip), wrapped about two or more segments of the article 100 in order to stably connect them.

In this embodiment, the component 101 forms part of the article 100.

Figure 4B shows an image of the aforesaid article 100 generated on the basis of electromagnetic radiation detected by a polarized detector. In the case in figure 4B, the article 100 has been struck by radiation emitted by means of an emitter 200 in the absence of the polarizing filter 300. By so doing, the incident electromagnetic radiation on the article 100 has different oscillation directions.

As shown in figure 4B, the image obtained is dark and devoid of a net contrast. In such a situation, although the connecting strip is identifiable from the rest of the article 100, it cannot be distinguished clearly enough and any signs present (markings, embossing) are not sufficiently distinguishable). Therefore, image 4B does not allow obtaining a precise and reliable dimensional and/or positional and/or qualitative information about the component 101, or part thereof.

Whereas, with reference to figure 4A, the article 100 has been struck by radiation emitted by an emitter 200 in the presence of the polarizing filter 300 according to the present invention. By so doing, the incident electromagnetic radiation on the article 100 has a single oscillation direction. In such a situation, the connecting strip is clearly identifiable and distinguishable from the rest of the article 100 allowing a precise and reliable dimensional and/or positional information about the component 101 to be obtained.

Also note that in figure 4A, the captions or embossing patterns are also clearly distinguishable from the rest of the article.

The present invention also relates to a filter tip attachment/combiner machine for making articles 100 of the tobacco industry, in particular, smoking articles or aerosol-generating articles, in particular, a machine suitable for operating the aforesaid method.

With reference to the specific embodiment in figure 5B, the machine is a filter tip attachment machine receiving a series of tobacco segments from a maker machine "M" for making tobacco segments (alternatively, said segments could be segments for generating aerosols optionally devoid of tobacco).

The maker machine "M" preferably makes a continuous rod of tobacco (alternatively, said rod could comprise a material for generating aerosols optionally devoid of tobacco) and periodically cuts the rod, making a series of tobacco segments having a double length. Below, specific reference will be made to the tobacco without loss of generality.

The filter tip attachment machine is configured for applying at least one filter segment to the tobacco segments, obtaining cigarettes 100 with a filter.

More specifically, the filter tip attachment machine comprises, downstream of the maker machine "M", a transfer station "B" in which tobacco segments having a double length, advanced along a longitudinal direction, are diverted from the longitudinal path thereof and caused to advance along a direction transverse to the development axis thereof.

This transfer station "B" therefore operates as a first feed unit of tobacco segments, which could be fed from a hopper, having a corresponding descent line, instead of being fed directly from a maker machine. Successively, the tobacco segments having a double length are transferred to a cutting and opening station "C" where they are cut to obtain tobacco segments having a unit length, mutually spaced apart. Successively, the tobacco segments, thus spaced apart, are conveyed to a combining drum "E".

The filter tip attachment machine further comprises a second feed unit "D" for filter sections having a double length. These filter sections are conveyed, e.g., through a series of drums, from the feed station "D" to the combining drum "E".

On the combining drum "E", each filter section having a double length is interposed between two respective tobacco segments having a unit length. The filter tip attachment machine further comprises a connecting strip feed station "F" (preferably made of paper). In this station, the paper is fed from a web and successively cut into portions (connecting strips) so that each portion can be intended for being wrapped about the assembly formed by the open tobacco segments and the respective filter section having a double length. In such a situation, downstream of the combining drum "E", during the advancing of the tobacco segments combined with the respective filter section having a double length, a web portion (connecting strip) is applied thereto "as a flag" and successively wrapped so as to obtain an article (cigarette) 100 having a double length. The wrapping operation is carried out in a rolling station "G" located downstream of the combining drum "E".

The filter tip attachment machine further comprises, downstream of the rolling station "G", a cutting station "H" in which the articles 100 having a double length are cut so as to obtain articles 100 having a unit length forming two parallel flows.

Downstream of the cutting station "H", the manufacturing unit comprises an overturning station "I" in which the articles 100 of one of the two flows are overturned so as to make a single uniform flow of articles having a single length with the same orientation.

According to a variant, not shown, the first feed unit "B" is configured for feeding single or multi-segment rod sections containing at least one segment for generating aerosols, while the second feed unit "D" is configured for feeding single or multi-segment rod sections containing at least one filter segment. The combination of these segments forms an article (or part of an article) for generating aerosols by means of heating (in this case a filter tip application machine is not used, but a combiner machine.

According to a further variant not shown, the first feed unit "B" is configured for feeding single or multi-segment rod sections containing at least one filter segment, while the second feed unit "D" is configured for feeding single or multi-segment rod sections containing at least one segment for generating aerosols. The combination of these segments forms an article or part of an article for generating aerosols by means of heating (also in this case a filter tip application machine is not used, but a combiner machine).

More generally, the first feed unit "B" and the second feed unit "D" are intended to feed single-segment or multi-segment rod sections, the combination of which downstream of the rolling defines a semi-finished or finished, ready-to-use article (having a unit or double length). Thereby, the connecting strip defines a component of the visible article.

For the purposes of implementing the method according to the invention, the filter tip attachment machine or combiner machine comprises a detecting station "R" for inspecting at least one component (rod section or connecting strip) or each article.

As shown in figure 5A, an electromagnetic radiation emitter 200 is located in the detecting station "R" configured and/or arranged to direct the radiation towards at least one portion of a component 101 of the article 100, in particular onto the outer cylindrical surface.

The system "A" further comprises a polarizing filter 300 configured for selectively filtering the electromagnetic radiation emitted by the emitter 200 based on a specific oscillation direction so that the portion of the component 101 is struck by polarized radiation.

The system "A" further comprises a detector 400, preferably a polarized camera, located in the detecting station "R" and configured for detecting the electromagnetic radiation reflected by the component 101 of the article 100.

The system "A" further comprises a control unit connected to the detector 400 and configured for generating an image of the component portion 101 based on the radiation detected by the detector 400 and for obtaining a qualitative and/or dimensional and/or positional information about a component 101 of the article 100, in particular about a discrete component 101 applied to the article 100 or to the rod section or forming part of the article 100 or rod section.

This discrete component 101 can be the connecting strip or a portion thereof or, alternatively, a feature applied thereon, e.g., a caption or embossing or symbol or graphical sign. Alternatively, the discrete component 101 can be a portion of a rod section remaining visible after the application of the strip.

In the preferred embodiment, the control unit is configured, during the step of obtaining the at least one qualitative and/or positional and/or dimensional information, for determining, e.g., by means of a graphic processing software program, a boundary of this discrete component 101. The detecting station "R" can be positioned at any point along the flow followed by the rod sections or by the article in the filter tip attachment/combiner machine, in the correct position for detecting the outer cylindrical surface of the article 100 or rod section.

For example, the detecting station "R" can be positioned upstream of the rolling station "G" so as to carry out the detection on the rod sections, or downstream to carry out the detection on the articles 100 having a single or double length, thus downstream of the rolling station "G" and upstream/downstream of the cutting station "H".

The present invention also relates to a packing machine 500 for making packs "P" of articles of the tobacco industry, in particular, packs of rod-shaped smoking articles 100, in particular, a machine suitable for implementing the method according to the above description.

The packing machine 500, shown in figure 6, comprises a feed station configured for feeding a series of groups 600 of articles of the tobacco industry, for example cigarettes having a filter (e.g., of the traditional type or of the heat-not-burn type).

The machine 500 further comprises a packing machine, configured for wrapping about each group 600 of articles at least one overwrapping so as to obtain a respective series of packs of smoking articles.

According to the illustrated embodiment, the packing station is configured for wrapping, about each group of articles, an inner wrap, e.g., made of aluminum or a heat-shrinkable material (plastic or paper), and an outer wrap, in particular made of a paper material (cardboard).

In further detail, the packing station comprises a first wrapping drum 520 configured for wrapping, about each group 600 of articles, a sheet of inner wrapping, preferably made of aluminum or a heat-shrinkable material (plastic or paper), coming from a first warehouse 530 and collected by a respective first gripping wheel 540.

The packing station further comprises a second wrapping drum 550 configured for forming, about each group 600 of articles covered with the sheet of inner wrapping (inner pack), at least a part of the outer casing (outer pack). To this end, the second wrapping drum 550 receives a series of blanks "S" from a second warehouse 560, collected by a respective second gripping wheel 570, and forms, at least partially, a box-like body about the inner pack by means of folding this blank "S".

The packing station further comprises a third wrapping drum 580 configured for completing the bending of each blank "S" finalizing the formation of the outer pack.

Each pack thus completed is transferred to further processing units by means of a transfer conveyor 590.

A further station is preferably provided for wrapping, with an outer casing made of a see-through material, in particular a heat-shrinkable material, defining a further wrapping layer (outermost) of the pack.

In this embodiment, the detecting station "R" is located to detect a portion of the inner pack and/or of the outer pack.

The detecting station "R", in particular, can be located on the transfer conveyor 590 or downstream thereof (in particular downstream of the unit in which the wrapping of the pack is carried out with a wrapping layer, for example with a heat-shrinkable material provided with a tear strip) or, alternatively, downstream of the formation of the inner pack and upstream of the wrapping with the blank "S".

The detecting station "R" is structurally similar to the previously described with reference to the detection of components of smoking articles.

In this case, the control unit "R" is configured for generating an image of the pack based on the radiation detected by the detector 400 and for obtaining at least one qualitative and/or dimensional and/or positional information about a component 101 of the pack.

For example, the component 101 is a tear tape, or a portion thereof, intended for tearing open the overwrapping, or a state sticker or a general label or another separate component applied to the outer surface of the inner/outer pack.

The present invention achieves the intended objects by eliminating the drawbacks of the prior art.

In particular, by virtue of the use of the polarized sensor, in conjunction with the polarized detector, it is possible to obtain an image of the article 100 in which one or more components 101 are clearly recognizable and such as to allow obtaining a dimensional and/or positional information about the component 101 to determine whether the article 100 complies, or not, with the desired condition.

## Claims

1. A method for performing an optical analysis of an article (100) of the tobacco industry, comprising the steps of:
- providing an article (100) of the tobacco industry;
- providing an electromagnetic radiation emitter (200);
- providing a polarizing filter (300) configured for selectively filtering the electromagnetic radiation emitted by the emitter (200) based on the respective oscillation direction;
- directing the radiation emitted by the emitter (200) towards the article (100) so that the article (100) is struck by polarized radiation;
- by means of a detector (400), detecting the electromagnetic radiation reflected by the article (100);
- generating an image of the article (100), based on said detected electromagnetic radiation;
wherein said emitter (200) and said detector (400) have different axes defining different angles to one another with respect to the outer surface of the article (100).

2. A method according to claim 1, wherein the axis of said detector (400) defines a different angle from 90° with respect to a portion of the outer surface of the article (100) on which the radiation is directed.

3. A method according to claim 1 or 2, further comprising a step of processing said image by means of a processing software program to obtain a qualitative and/or dimensional and/or positional information about a component (101) of said article (100), in particular about a discrete component (101) applied to said article (100) or forming part of said article (100).

4. A method according to claim 3, wherein the step of obtaining a qualitative and/or dimensional and/or positional information about the component (101) comprises a step of determining the boundary of said component (101), in particular, by means of a contrast recognition algorithm.

5. A method according to any one of the preceding claims, wherein said detector (400) is a polarized detector and/or comprises a sensor, which is polarized concordantly with said polarizing filter (300) so as to detect the polarized component of the electromagnetic radiation emitted by the emitter (200) and reflected, preferably unalterably, by the article (100).

6. A method according to any one of the preceding claims, wherein said emitter (200) is located coaxially to said detector (400).

7. A method according to claim 6, wherein said emitter (200) is interposed between said detector (400) and said article (100) and wherein said emitter (200) has an annular structure so that the electromagnetic radiation reflected by the article (100) reaches the detector (400) passing through an empty space region within the annular shape of the emitter (200).

8. A method according to any one of claims 3 to 7, wherein said at least one component (101) of the article (100) is a metallic or metallized component.

9. A method according to any one of claims 3 to 8, wherein at least part of said component (101) defines an outer surface portion of the article (100).

10. A method according to any one of the preceding claims, wherein said article (100) has a cylindrical shape and wherein the step of directing the radiation towards the article (100) is carried out by directing the radiation towards a cylindrical outer surface of the article (100).

11. A method according to any one of claims 1 to 8, wherein the step of directing the radiation towards the article (100) is carried out by directing the radiation towards an end surface of said article (100).

12. A method according to any one of claims 3 to 11, wherein said article (100) is a smoking article or an aerosol-generating article and wherein said component (101) is a connecting strip or a portion or feature of said connecting strip, for example, a metallized portion or a caption or embossing or symbol or graphical sign, wrapped about two or more segments of said article (100) in order to stably connect them.

13. A method according to any one of claims 3 to 10, wherein said article (100) is a pack of smoking articles having an overwrapping, preferably made of a heat-shrinkable material, and wherein said component (101) is a tear tape or a portion thereof intended for tearing open said overwrapping.

14. A method according to any one of the preceding claims, wherein said radiation is visible radiation and wherein said detector (400) comprises a camera.

15. A filter tip attachment/combiner machine for making articles (100) of the tobacco industry, in particular, smoking articles or aerosol-generating articles, in particular, a machine suitable for operating the method according to one or more of the preceding claims, comprising:
- a first feed unit (B), configured for feeding first rod-shaped sections;
- a second feed unit (D), configured for feeding second rod-shaped sections;
- a combining drum (E) configured for receiving the first rod sections from the first feed unit (B) and the second rod sections from the second feed unit (D) so as to form groups which each comprise at least a first rod section and a second rod section together defining respective components (101);
- a rolling station (G), configured for receiving said groups and wrapping said groups with a connecting strip, defining a further component (101), so as to make a stable, mutual connection between the rod sections of the group and define an article (100);
**characterized in that** it comprises, upstream or downstream of the rolling station (G), a detecting station (R), configured for inspecting each article (100) or at least one component (101) of the article (100), said detecting station (R) comprising:
- an electromagnetic radiation emitter (200), configured and/or arranged to direct the radiation towards at least one component (101);
- a polarizing filter (300) configured for selectively filtering the electromagnetic radiation emitted by the emitter (200) based on a specific oscillation direction so that the portion of a component (101) is struck by polarized radiation;
- a detector (400), preferably a polarized camera, configured for detecting the electromagnetic radiation reflected by the component (101);
and **in that** it further comprises a control unit connected to the detector (400) and configured for generating an image of the component portion (101) based on the radiation detected by the detector (400) and for obtaining a qualitative and/or dimensional and/or positional information about a component (101) of the article (100), in particular, about a discrete component (101) applied to the article (100) or to the rod section or forming part of the article (100) or rod section;
said emitter (200) and said detector (400) having different axes, defining different angles to one another with respect to the outer surface of the article (100).

16. A packing machine for making articles (100) of the tobacco industry, in particular, packs of rod-shaped smoking articles (100), in particular, a machine suitable for implementing the method according to one or more of the preceding claims, comprising:
- a feed station, configured for feeding a series of groups of rod-shaped smoking articles (100);
- a packing station (520, 550, 580), configured for wrapping about each group of articles at least one overwrapping, in particular, at least an inner wrap and an outer wrap, forming an article (100) of the tobacco industry;
**characterized in that** it comprises a detecting station (R), located downstream of the packing station (520, 550, 580), configured for inspecting each article (100) and comprising:
- an electromagnetic radiation emitter (200), configured and/or arranged to direct the radiation towards at least one component (101) of the article (100);
- a polarizing filter (300) configured for selectively filtering the electromagnetic radiation emitted by the emitter (200) based on the respective oscillation direction so that said component (101) is struck by polarized radiation;
- a detector (400), configured for detecting the electromagnetic radiation reflected by the component (101);
and **in that** it further comprises a control unit connected to the detector (400) and configured for generating an image of said component (101) based on the radiation detected by the detector (400) and for obtaining at least one dimensional and/or positional information about a component (101) of said article (100), in particular, said component (101) being a tear tape or a portion thereof intended for tearing open the outermost overwrapping of said article (100);
said emitter (200) and said detector (400) having different axes, defining different angles to one another with respect to the outer surface of the article (100).
